# EUROPEAN PATENT APPLICATION

(11) **EP 4 614 904 A1**
(43) Date of publication of application: **10.09.2025**
(21) Application number: 22964123.8
(22) Date of filing: 04.11.2022
(51) Int. Cl.: H04L 27/00

(54) **INDICATION METHOD AND APPARATUS, AND DEVICE AND CHIP SYSTEM**

(71) Applicant: Beijing Xiaomi Mobile Software Co., Ltd., Beijing 100085 (CN)
(72) Inventor: CHI, Liangang, Beijing 100085 (CN); DUAN, Gaoming, Beijing 100085 (CN)
(74) Representative: Gunzelmann, Rainer
(86) International application number: PCT/CN2022/130130
(87) International publication number: WO 2024/092822

(57) **Abstract**

Disclosed in the embodiments of the present disclosure are an indication method and apparatus, and a device and a chip system, which may be applied to a communication system. The method comprises: sending indication information to a terminal device, wherein the indication information is used for enabling the terminal device to determine a transmission configuration indicator (TCI) state list related to a control resource pool, and the control resource pool comprises: at least one control resource set. The method of the present disclosure is implemented, such that the effective indication of a TCI state list of a control resource set (CORESET) in a multi-TRP connection scenario can be supported.

## Description

### TECHNICAL FIELD

The present disclosure relates to the field of communication technologies, and particularly to an indication method and apparatus, a device, and a chip system.

### BACKGROUND

Distributed multiple input multiple output (MIMO) may be applied to a single-cell cellular base station system, and further a multi-cell cellular base station may be replaced to form a cellular-free mobile communication system in the form of distributed MU-MIMO. For a user equipment (UE), distributed MIMO means that there may be multiple transmission reception points (TRPs) providing services for the equipment at the same time, there is no cell switching, and the signal quality is better guaranteed, which may meet service requirements of high rate and high capacity. Because different TRPs are located at different positions in space, the corresponding large-scale fading of each TRP is obviously different. In a joint transmission of multiple TRPs, it is necessary to indicate corresponding beam information of different TRPs. Downlink beam information is indicated by a transmission configuration indicator (TCI) state. Radio resource control (RRC) may configure up to 128 TCI states for the UE, of which up to 8 TCI states are activated by a media access control control element (MAC CE) to be mapped to a TCI information domain of downlink control information (DCI). A TCI state indication method based on multi-downlink control information (M-DCI) at most supports indication of TCIs state based on 2 TRPs. However, with the increasing maturity of distributed MIMO technology, the number of TRPs for the joint transmission will be increasing, and some versions of communication protocols have involved up to 4 TRP connections.

In related technologies, a valid indication of a TCI state list of a control resource set (CORESET) in a multi-TRP connection scenario cannot be supported.

### SUMMARY

Embodiments of the present disclosure provide an indication method and apparatus, a device, a chip system, a storage medium, a computer program, and a computer program product, which may be applied in the field of communication technology and may achieve a valid indication of a transmission configuration indicator (TCI) state list of a control resource set (CORESET) in a multi-TRP connection scenario.

In a first aspect, the embodiments of the present disclosure provide an indication method. The method is performed by a network device, and includes: sending indication information to a user equipment (UE), in which the indication information is used to enable the UE to determine a transmission configuration indicator (TCI) state list related to a control resource set (CORESET) pool, and the CORESET pool includes at least one CORESET.

In the indication method provided by an embodiment of the present disclosure, sending the indication information to the UE includes:
sending a signaling to the UE, wherein the signaling carries the indication information;
in which the indication information includes at least one CORESET pool identifier (ID) and includes at least one of:
a logical channel identity document (LCID) of a downlink data channel; or
an extended logical channel identity document (eLCID) of a downlink data channel.

In the indication method provided by an embodiment of the present disclosure, the indication information includes:
a logical channel identity document (LCID); in which the LCID includes: a first value and a second value; and
a first CORESET pool ID;
in which the first value, the second value and the first CORESET pool ID are used to enable the UE to determine the TCI state list related to the CORESET pool.

In the indication method provided by an embodiment of the present disclosure, the indication information includes:
a logical channel identity document (LCID); in which the LCID includes: a first value;
a first CORESET pool ID; and
a second CORESET pool ID;
in which the first value, the first CORESET pool ID and the second CORESET pool ID are used to enable the UE to determine the TCI state list related to the CORESET pool.

In the indication method provided by an embodiment of the present disclosure, the indication information includes:
an extended logical channel identity document (eLCID); in which the eLCID includes: a third value and a fourth value; and
a first CORESET pool ID;
in which the third value, the fourth value and the first CORESET pool ID are used to enable the UE to determine the TCI state list related to the CORESET pool.

In the indication method provided by an embodiment of the present disclosure, the indication information includes:
an extended logical channel identity document (eLCID); in which the eLCID includes: a third value;
a first CORESET pool ID; and
a second CORESET pool ID;
in which the third value, the first CORESET pool ID and the second CORESET pool ID are used to enable the UE to determine the TCI state list related to the CORESET pool.

In the indication method provided by an embodiment of the present disclosure, the indication information includes:
a logical channel identity document (LCID); in the LCID includes: a first value;
a first CORESET pool ID; and
a third CORESET pool ID;
in which the first value, the first CORESET pool ID and the third CORESET pool ID are used to enable the UE to determine the TCI state list related to the CORESET pool.

In the indication method provided by an embodiment of the present disclosure, the indication information includes:
an extended logical channel identity document (eLCID); in which the eLCID includes: a third value;
a first CORESET pool ID; and
a third CORESET pool ID;
in which the third value, the first CORESET pool ID and the third CORESET pool ID are used to enable the UE to determine the TCI state list related to the CORESET pool.

In the indication method provided by an embodiment of the present disclosure, the indication information is carried in a media access control control element (MAC CE) signaling;
in which a TCI state indicated by downlink control information (DCI) sent on a CORESET in the CORESET pool is derived from the TCI state list in the MAC CE signaling of the CORESET pool.

In a second aspect, the embodiments of the present disclosure provide an indication method. The method is performed by a user equipment (UE), and includes: receiving indication information sent by a network device; determining a transmission configuration indicator (TCI) state list related to a control resource set (CORESET) pool based on the indication information, in which the CORESET pool includes at least one CORESET.

In the indication method provided by an embodiment of the present disclosure, receiving the indication information sent by the network device includes:
receiving a signaling sent by the network device, in which the signaling carries the indication information;
in which the indication information includes at least one CORESET pool identifier (ID) and includes at least one of:
a logical channel identity document (LCID) of a downlink data channel; or
an extended logical channel identity document (eLCID) of a downlink data channel.

In the indication method provided by an embodiment of the present disclosure, the indication information includes:
a logical channel identity document (LCID); in which the LCID includes: a first value and a second value; and
a first CORESET pool ID;
in which determining the TCI state list related to the CORESET pool based on the indication information includes:
determining the TCI state list related to the CORESET pool based on the first value, the second value and the first CORESET pool ID.

In the indication method provided by an embodiment of the present disclosure, the indication information includes:
a logical channel identity document (LCID); in which the LCID includes: a first value;
a first CORESET pool ID; and
a second CORESET pool ID;
in which determining the TCI state list related to the CORESET pool based on the indication information includes:
determining the TCI state list related to the CORESET pool based on the first value, the first CORESET pool ID and the second CORESET pool ID.

In the indication method provided by an embodiment of the present disclosure, the indication information includes:
an extended logical channel identity document (eLCID); in which the eLCID includes: a third value and a fourth value; and
a first CORESET pool ID;
in which determining the TCI state list related to the CORESET pool based on the indication information includes:
determining the TCI state list related to the CORESET pool based on the third value, the fourth value and the first CORESET pool ID.
In the indication method provided by an embodiment of the present disclosure, the indication information includes:
an extended logical channel identity document (eLCID); in which the eLCID includes: a third value;
a first CORESET pool ID; and
a second CORESET pool ID;
in which determining the TCI state list related to the CORESET pool based on the indication information includes:
determining the TCI state list related to the CORESET pool based on the third value, the first CORESET pool ID and the second CORESET pool ID.

In the indication method provided by an embodiment of the present disclosure, the indication information includes:
a logical channel identity document (LCID); in which the LCID includes: a first value;
a first CORESET pool ID; and
a third CORESET pool ID;
in which determining the TCI state list related to the CORESET pool based on the indication information includes:
determining the TCI state list related to the CORESET pool based on the first value, the first CORESET pool ID and the third CORESET pool ID.

In the indication method provided by an embodiment of the present disclosure, the indication information includes:
an extended logical channel identity document (eLCID); in which the eLCID includes: a third value;
a first CORESET pool ID; and
a third CORESET pool ID;
in which determining the TCI state list related to the CORESET pool based on the indication information includes:
determining the TCI state list related to the CORESET pool based on the third value, the first CORESET pool ID and the third CORESET pool ID.

In the indication method provided by an embodiment of the present disclosure, the indication information is carried in a media access control control element (MAC CE) signaling;
in which a TCI state indicated by downlink control information (DCI) received on a CORESET in the CORESET pool is derived from the TCI state list in the MAC CE signaling of the CORESET pool.

In a third aspect, the embodiments of the present disclosure provide a communication apparatus that has some or all of functions of the network device in the method described in the first aspect above, for example, the communication apparatus may have the functions in some or all of the embodiments of the present disclosure or may have the functions for independently implementing any one of the embodiments of the present disclosure. The functions may be realized by a hardware or by a software which is executed by a hardware. The hardware or software includes one or more units or modules corresponding to the above functions.

Optionally, in an embodiment of the present disclosure, the communication apparatus may include a transceiver module and a processing module, in which the processing module is configured to support the communication apparatus to perform the corresponding functions in the above method, the transceiver module is configured to support a communication between the communication apparatus and other devices. The communication apparatus may also include a storage module, in which the storage module is configured to couple with the transceiver module and the processing module, and save a computer program and data necessary for the communication apparatus.

As an example, the processing module may be a processor, the transceiver module may be a transceiver or a communication interface, and the storage module be a memory.

In a fourth aspect, the embodiments of the present disclosure provide a communication apparatus that has some or all of functions of the terminal in the method described in the second aspect above, for example, the communication apparatus may have the functions in some or all of the embodiments of the present disclosure or may have the functions for independently implementing any one of the embodiments of the present disclosure. The functions may be realized by a hardware or by a software which is executed by a hardware. The hardware or software includes one or more units or modules corresponding to the above functions.

Optionally, in an embodiment of the present disclosure, the structure of the communication apparatus may include a transceiver module and a processing module, in which the processing module is configured to support the communication apparatus to perform corresponding functions in the above method, and the transceiver module is configured to support a communication between the communication apparatus and other devices. The communication apparatus may also include a storage module, in which the storage module is configured to couple with the transceiver module and the processing module, and save a computer program and data necessary for the communication apparatus.

In a fifth aspect, the embodiments of the present disclosure provide a communication apparatus including a processor. When a computer program in a memory is called by the processor, the method in the first aspect is implemented.

In a sixth aspect, the embodiments of the present disclosure provide a communication apparatus including a processor. When a computer program in a memory is called by the processor, the method in the second aspect is implemented.

In a seventh aspect, the embodiments of the present disclosure provide a communication apparatus, including a memory for storing a computer program and a processor. When the computer program stored in the memory is executed by the processor, the communication apparatus is caused to implement the method in the first aspect.

In an eighth aspect, the embodiments of the present disclosure provide a communication apparatus, including a memory for storing a computer program and a processor. When the computer program stored in the memory is executed by the processor, the communication apparatus is caused to implement the method in the second aspect.

In a ninth aspect, the embodiments of the present disclosure provide a communication apparatus, including a processor and an interface circuit for receiving code instructions and sending the code instructions to the processor, in which the processor is configured to run the code instructions to cause the device to perform the method in the first aspect.

In a tenth aspect, the embodiments of the present disclosure provide a communication apparatus, including a processor and an interface circuit for receiving code instructions and sending the code instructions to the processor, in which the processor is configured to run the code instructions to cause the device to perform the method in the second aspect.

In an eleventh aspect, the embodiments of the present disclosure provide a communication system. The system includes a communication apparatus described in the third aspect and a communication apparatus described in the fourth aspect, or the system includes a communication apparatus described in the fifth aspect and a communication apparatus described in the sixth aspect, or the system includes a communication apparatus described in the seventh aspect and a communication apparatus described in the eighth aspect, or the system includes a communication apparatus described in the ninth aspect and a communication apparatus described in the tenth aspect. n

In a twelfth aspect, a computer-readable storage medium is provided in the embodiments of the present disclosure. The computer-readable storage medium is configured to store instructions used by the network device. When the instructions are executed, the network device is caused to perform the method as described in the first aspect.

In a thirteenth aspect, a computer-readable storage medium is provided in the embodiments of the present disclosure. The computer-readable storage medium is configured to store instructions used by the UE. When the instructions are executed, the UE is caused to perform the method as described in the second aspect.

In a fourteenth aspect, a computer program product including a computer program is provided in the embodiments of the present disclosure. When the computer program is running on a computer, the computer is caused to perform the method as described in the first aspect.

In a fifteenth aspect, a computer program product including a computer program is further provided in the embodiments of the present disclosure. When the computer program is running on a computer, the computer is caused to perform the method as described in the second aspect.

In a sixteenth aspect, a system on chip (SOC) is provided in the disclosure. The SOC includes at least one processor and an interface configured to support the network device to perform functions involved in the first aspect, and for example, to determine or process at least one of data and information involved in the above methods.

In a possible design, the SOC further includes a memory. The memory is configured to save a necessary computer program and data of the network device. The SOC may consist of a chip, or may include a chip and other discrete devices.

In a seventeenth aspect, a system on chip (SOC) is provided in the disclosure. The SOC includes at least one processor and an interface configured to support the UE to perform functions involved in the second aspect, and for example, to determine or process at least one of data and information involved in the above methods.

In a possible design, the SOC further includes a memory. The memory is configured to save a necessary computer program and data of the UE. The SOC may consist of a chip, or may include a chip and other discrete devices.

In an eighteenth aspect, a computer program is provided in the present disclosure. When the computer program is running on a computer, the computer is caused to perform the indication method as described in the first aspect.

In a nineteenth aspect, a computer program is provided in the present disclosure. When the computer program is running on a computer, the computer is caused to perform the indication method as described in the second aspect.

In summary, the indication method and apparatus, and the device, the chip system, the storage medium, the computer program and the computer program product provided in the embodiments of the present disclosure may achieve the following technical effects.

The indication information is sent to the UE, to indicate to the UE the TCI state list related to the CORESET pool based on the indication information, and the CORESET pool includes at least one CORESET, which may achieve a valid indication of the TCI state list of the CORESET in the multi-TRP connection scenario.

### BRIEF DESCRIPTION OF THE DRAWINGS

In order to explain embodiments of the disclosure or technical solutions in the related art more clearly, the drawings described in the embodiments of the disclosure or required in the related art will be briefly introduced below.
FIG. 1 is a diagram illustrating an architecture of a communication system provided in an embodiment of the present disclosure;
FIG. 2 is a flowchart illustrating an indication method provided in an embodiment of the present disclosure;
FIG. 3 is a flowchart illustrating an indication method provided in an embodiment of the present disclosure;
FIG. 4 is a schematic diagram of a format of protocol data unit (PDU) of a MAC CE signaling in related technologies;
FIG. 5 is a schematic diagram of a format of MAC CE signaling frame in an embodiment of the present disclosure;
FIG. 6 is a schematic diagram of a format of MAC CE signaling frame in an embodiment of the present disclosure;
FIG. 7 is a schematic diagram of apparatus MAC CE signaling frame in an embodiment of the present disclosure;
FIG. 8 is a flowchart illustrating an indication method provided in an embodiment of the present disclosure;
FIG. 9 is a flowchart illustrating an indication method provided in an embodiment of the present disclosure;
FIG. 10 is a block diagram illustrating a communication apparatus provided in an embodiment of the present disclosure;
FIG. 11 is a block diagram illustrating a communication apparatus provided in another embodiment of the present disclosure;
FIG. 12 is a block diagram of a chip provided in an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

The terms used in the embodiment of the present disclosure are merely for the purpose of describing a particular embodiment and are not intended to limit the embodiment of the present disclosure. The terms "a" and "the" in the singular form as used in the embodiment of the present disclosure and the accompanying claims are also intended to include the majority form, unless the context clearly indicates otherwise. It should also be understood that the term "and/or" as used herein refers to and encompasses any or all possible combinations of one or more associated listed items.

It is understood that although the terms first, second, third, etc. may be used to describe various information in the embodiments of the present disclosure, such information should not be limited to these terms. These terms are used only to distinguish the same type of information from one to another. For example, without leaving the scope of the present disclosure, the first information may also be referred to as the second information, and similarly, the second information may also be referred to as the first information. Depending on the context, the words "if" used here can be interpreted as "in... when" or "in response to".

For ease of understanding, terms involved in the disclosure are introduced first.

A control resource set (CORESET) pool usually includes one or more CORESETs. The CORESET is a time-frequency region to send a physical downlink control channel (PDCCH) (downlink control information (DCI), may be carried by the PDCCH).

In order to understand the indication method disclosed in embodiments of the present disclosure better, a communication system to which the embodiments of the present disclosure are applicable is described below.

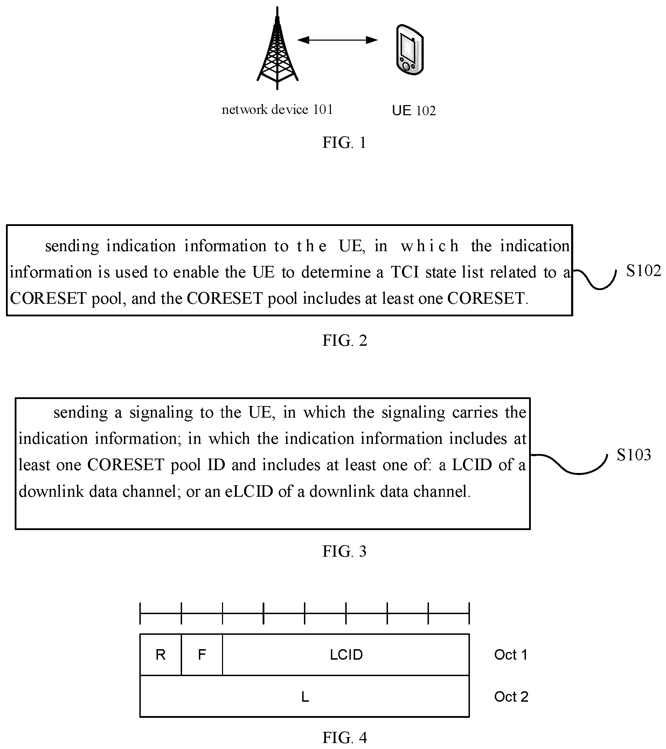

As illustrated in FIG. 1, which is a diagram illustrating an architecture of a communication system provided in an embodiment of the present disclosure. The communication system may include, but is not limited to, one network device and one terminal. The number and form of devices shown in FIG. 1 are only shown as an example, and do not constitute a limitation on the embodiments of the present disclosure. The communication system may include two or more network devices and two or more terminals in a practical application. The communication system in FIG. 1 including one network device 101 and one terminal 102 is shown as an example.

It needs to be noted that the technical solution in the embodiments of the present disclosure may be applicable to various communication systems, for example, a long term evolution (LTE) system, a 5th generation (5G) mobile communication system, a 5G new radio (NR) system or other future new mobile communication systems.

The network device 101 in the embodiments of the present disclosure is an entity on the network side for sending or receiving signals. For example, the network device 101 may be an evolved NodeB (eNB), a transmission reception point (TRP), a next generation NodeB (gNB) in an NR system, a base station in other mobile communication system in the future, or an access node in a wireless fidelity (WiFi) system. The embodiments of the present disclosure do not limit the specific technology and the specific device form used by the network device.

The network device in the embodiments of the present disclosure may include a central unit (CU) and a distributed unit (DU), in which the CU may also be called a control unit. A protocol layer of the network device, for example, a base station, may be divided by adopting the CU-DU structure. Some functions of the protocol layer are centrally controlled by the CU, and some or all of remaining functions of the protocol layer are distributed in the DU, which is centrally controlled by the CU.

The terminal 102 in the embodiments of the present disclosure is an entity on the user side for receiving or sending signals, such as a mobile phone. Terminal may also be called a user equipment (UE), a mobile station (MS), a mobile terminal (MT), etc. Terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc.

The embodiments of the present disclosure do not limit the specific technology and the specific device form used by the terminal.

It should be understood that the communication system in the embodiments of the present disclosure is to more clearly illustrate the technical solution of the embodiments of the present disclosure, and does not constitute a limitation on the technical solution in the embodiments of the present disclosure. Those skilled in the art may know, with the evolution of the system architecture and the emergence of new service scenarios, the technical solution in the embodiments of the present disclosure is also applicable to similar technical problems.

The indication method and apparatus provided in the present disclosure are introduced in detail in combination with the attached drawings. FIG. 2 is a flowchart illustrating an indication method in an embodiment of the present disclosure. The method is performed by a network device. The indication method in the embodiment may be applied to the network device without limitation.

As illustrated in FIG. 2, the method may include but not limited to the following steps.

S102: indication information is sent to a user equipment (UE), in which the indication information is used to enable the UE to determine a transmission configuration indicator (TCI) state list related to a control resource set (CORESET) pool, and the CORESET pool includes at least one CORESET.

The network device may send the indication information to the UE, which may indicate to the UE the TCI state list related to the CORESET pool.

A control resource set (CORESET) pool usually includes one or more CORESETs. The CORESET is a time-frequency region to send a physical downlink control channel (PDCCH) (downlink control information (DCI), may be carried by the PDCCH).

In the scenario of indicating a TCI state of multi-downlink control information (M-DCI), one transmission reception point (TRP) corresponds to one CORESET pool, and one CORESET pool corresponds to one TCI state list (the TCI state list may be, for example, a TCI state activation/deactivation list, which is not restricted herein).

A CORESET pool contains one or more CORESETs. Each TRP sends the DCI. The DCI of each TRP is sent in a CORESET of a corresponding CORESET pool. The process of indicating a TCI state based on the DCI is described as follows. After detecting the DCI, the UE determines the CORESET where the DCI is, determines the CORESET pool to which the CORESET belongs, and then determines the TCI state list used by the CORESET pool. That is, a TCI state in the corresponding TCI state list may be indicated selectively by a TCI field in the DCI, which is not limited herein.

In the embodiments of the present disclosure, the network device may send indication information to the UE, so that the TCI state list related to the CORESET pool may be indicated to the UE based on the indication information. Then, it is realized that the relevant TCI state list is adapted through the indicated CORESET pool. In a case that the indicated CORESET pools are different, the different CORESET pools may be used to distinguish different TCI state lists. A CORESET pool may contain multiple CORESETs, and the corresponding TCI states in different CORESETs may come from the same TCI state list. An implicit correspondence is that the indicated one CORESET pool corresponds to one TRP, and the TCI states of different TRPs are different. Therefore, the indicating process is not limited to the number of CORESET pools in the multi-TRP connection scenario and may support the valid indication of the TCI state list of the CORESET in the multi-TRP connection scenario.

In this embodiment, the indication information is sent to the UE, to indicate to the UE the TCI state list related to the CORESET pool based on the indication information, and the CORESET pool includes at least one CORESET, which may achieve the valid indication of the TCI state list of the CORESET in the multi-TRP connection scenario.

FIG. 3 is a flowchart illustrating an indication method provided in an embodiment of the present disclosure. The method is performed by a network device. The indication method in the embodiment may be applied to the network device without limitation.

As illustrated in FIG. 3, the method may include but not limited to the following steps.

S103: a signaling is sent to a UE, in which the signaling carries indication information. The indication information is used to enable the UE to determine a transmission configuration indicator (TCI) state list related to a control resource set (CORESET) pool, and the CORESET pool includes at least one CORESET. The indication information includes at least one CORESET pool identifier (ID) and includes at least one of: a logical channel identity document (LCID) of a downlink data channel; or an extended logical channel identity document (eLCID) of a downlink data channel.

The above signaling may be a media access control control element (MAC CE) signaling.

The network device may send the signaling to the UE, the indication information may be carried in the signaling, and then the UE receives the signaling and decodes the signaling to get the indication information.

That is, the embodiment of the present disclosure supports reuse of an existing signaling to carry the indication information in the existing signaling. The signaling is sent to the UE so as to enable the UE to determine the TCI state list related to the CORESET pool.

In the embodiments, the signaling is sent to the UE, the signaling carries the indication information to indicate to the UE the TCI state list related to the CORESET pool based on the indication information, and the CORESET pool includes at least one CORESET, which may achieve a valid indication of the TCI state list of the CORESET in the multi-TRP connection scenario. And by carrying the indication information in the signaling, sending the indication information to the UE based on the way of sending the signaling, transmission efficiency and transmission security of the indication information may be effectively ensured, and additional indication costs may be effectively avoided.

In the indication method provided by an embodiment of the present disclosure, the indication information includes at least one CORESET pool ID and includes at least one of: a logical channel identity document (LCID) of a downlink data channel; or an extended logical channel identity document (eLCID) of a downlink data channel. Thus, in a case of indicating the TCI state list related to the CORESET pool based on at least one CORESET pool ID, and LCID of the downlink data channel and/or eLCID of the downlink data channel, the flexible indication may be realized, and the application scenarios of the indication method may be effectively expanded.

In the embodiments of the present disclosure, the valid indication of the TCI state list related to the CORESET pool may be supported based on a reserved value of the LCID and/or a reserved value of the eLCID of a MAC layer, and at least one CORESET pool ID, which may realize the valid indication of TCI state lists related to more CORESET pools.

In the embodiments of the present disclosure, the indication information is sent to the UE based on the signaling, and the signaling is a MAC CE signaling. As shown in FIG. 4, FIG. 4 is a schematic diagram of a format of protocol data unit (PDU) of a MAC CE signaling in related technologies. It shows the frame format of the PDU of the MAC CE signaling. R represents a reserved field in the frame format of the MAC CE PDU, and LCID represents a logical channel identifier. In the embodiments of the present disclosure, the reserved field R in the frame format of the MAC CE PDU, the LCID, the eLCID, and at least one CORESET pool ID may be combined to realize the valid indication of TCI state lists related to more CORESET pools.

In the embodiments of the present disclosure, the network device indicates the TCI state list related to the CORESET pool to the UE, in which the number of CORESET pools may be any one of 1,2,3,4, or, of course, any other possible number without limitation.

In the embodiments of the present disclosure, the network device indicates the TCI state list related to the CORESET pool to the UE, as an example, the number of CORESET pools indicated may be any one of 1,2,3,4, which is not limited herein.

In the embodiments of the present disclosure, the indication method may be realized by combining the reserved value of the LCID of the downlink data channel and the reserved value of the eLCID of the downlink data channel.

The reserved value of the LCID of the downlink data channel refers to any integer value selected from 35 to 46, including 35 and 46, that is, the value of the LCID in the indication information may be configured as any integer value selected from 35 to 46 to achieve the indication method.

The reserved value of the eLCID of the downlink data channel refers to any integer value selected from 0 to 226, including 0 and 226, that is, the value of the eLCID in the indication information may be configured as any integer value selected from 0 to 226 to achieve the indication method.

In a case that the values of LCID and/or eLCID are other values (for the LCID, other values do not range from 35 to 46, for the eLCID, other values do not range from 0 to 226), the represented specific meaning may be referred to the related technologies and will not be described here.

In the indication method provided by an embodiment of the present disclosure, the indication information includes: a logical channel identity document (LCID) and a first CORESET pool ID; in which the LCID includes: a first value and a second value; the first value, the second value and the first CORESET pool ID are used to enable the UE to determine the TCI state list related to the CORESET pool.

The first CORESET pool ID may be one of at least one CORESET pool ID contained in the indication information. In the embodiments of the present disclosure, the first value and the second value contained in the LCID, and the existing first CORESET pool ID may be combined to realize the valid indication of TCI state lists related to more CORESET pools.

The first value may be such as the above reserved value 35 of the LCID, and the second value may be such as the above reserved value 36 of the LCID. Of course, the first value may also be any one of the reserved values ranging from 35 to 46 of the LCID, and the second value may also be any one of the reserved values ranging from 35 to 46 of the LCID that is different from the first value, which are not limited herein.

Since the CORESET is a time-frequency region that sends the PDCCH, the UE considers that the data scheduled by the PDCCH in the same CORESET pool is from the same TRP. The indication method provided in the embodiments of the present disclosure, in a case of using a combination of two values (the first value and the second value) of the LCID with 1 bit existing first CORESET pool ID to indicate the CORESET pool, may be shown as follows for example.

The first value 35 and the second value 36 of the LCID, and the existing 1bit CORESET pool ID are combined to indicate TCI state lists related to different CORESET pools.

In a case that the LCID value is 35 (that is, the LCID includes the first value 35) and the CORSET pool ID is 0, the PDCCH comes from CORESET pool 0. In a case that the LCID value is 35 (that is, the LCID includes the first value 35) and the CORSET pool ID is 1, the PDCCH comes from CORESET pool 1. In a case that the LCID value is 36 (that is, the LCID includes the second value 36) and the CORSET pool ID is 0, the PDCCH comes from CORESET pool 2. In a case that the LCID value is 36 (that is, the LCID includes the second value 36) and the CORSET pool ID is 1, the PDCCH comes from CORESET pool 3. The CORESET pool 0, CORESET pool 1, CORESET pool 2, and CORESET pool 3 indicate corresponding TCI state lists related to different CORESET pools, respectively.

In the indication method provided by an embodiment of the present disclosure, the indication information includes: a logical channel identity document (LCID); a first CORESET pool ID; and a second CORESET pool ID; in which the LCID includes: a first value; the first value, the first CORESET pool ID and the second CORESET pool ID are used to enable the UE to determine the TCI state list related to the CORESET pool so as, to realize the valid indication of TCI state lists related to more CORESET pools.

The first CORESET pool ID may be one of at least one CORESET pool ID contained in the indication information. The second CORESET pool ID may be a new CORESET pool ID. For example, a new bit may be added in the MAC CE signaling to indicate the new CORESET pool ID, which may be combined with the existing first CORESET pool ID in the protocol and the first value of the LCID to realize the valid indication of TCI state lists related to more CORESET pools.

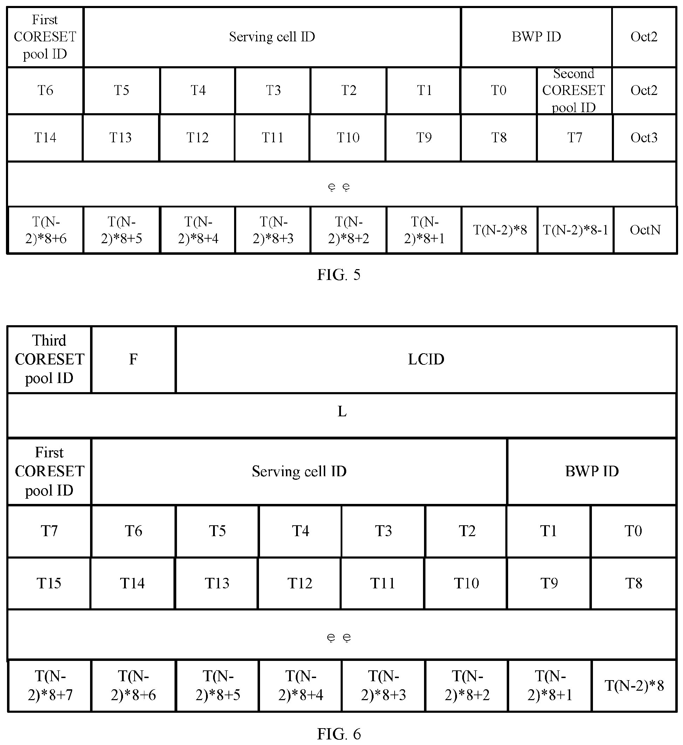

As shown in FIG. 5, FIG. 5 is a schematic diagram of a format of MAC CE signaling frame in an embodiment of the present disclosure. It includes the existing first CORSET pool ID, the new second CORSET pool ID, a serving cell identity document (Serving cell ID) and a bandwidth part identity document (BWP ID). A reserved value (the first value) of the LCID, the 1 bit first CORSET pool ID and 1 bit new second CORSET pool ID are combined to realize the valid indication of TCI state lists related to more CORESET pools. The new second CORSET pool ID is the bit where T0 of the MAC CE signaling frame in the related technology is located, and all Ti are shifted backward in sequence.

For example, the LCID includes: the first value 35. In a case that the LCID is 35, the existing first CORSET pool ID and the new second CORSET pool ID jointly indicate TCI lists related to different CORSET pools, as shown in Table 1 below.

**Table 1**

| LCID | CORESET pool ID | CORESET pool |
|---|---|---|
| 35 | 00 | CORESET pool 0 |
| 35 | 01 | CORESET pool 1 |
| 35 | 10 | CORESET pool 2 |
| 35 | 11 | CORESET pool 3 |

In a case that the CORESET pool ID is 00, it indicates that the existing first CORESET pool ID is 0 and the new second CORESET pool ID is 0. In a case that the CORESET pool ID is 01, it indicates that the existing first CORESET pool ID is 0 and the new second CORESET pool ID is 1. In a case that the CORESET pool ID is 10, it indicates that the existing first CORESET pool ID is 1 and the new second CORESET pool ID is 0. In a case that the CORESET pool ID is 11, it indicates that the existing first CORESET pool ID is 1 and the new second CORESET pool ID is 1. In a case that the LCID value is 35 (that is, the LCID includes the first value 35) and the CORSET pool ID is 00, the PDCCH is from CORESET pool 0. In a case that the LCID value is 35 (that is, the LCID includes the first value 35) and the CORSET pool ID is 01, the PDCCH is from CORESET pool 1. In a case that the LCID value is 35 (that is, the LCID includes the first value 35) and the CORSET pool ID is 10, the PDCCH is from CORESET pool 2. In a case that the LCID value is 35 (that is, the LCID includes the first value 35) and the CORSET pool ID is 11, the PDCCH is from CORESET pool 3. The CORESET pool 0, CORESET pool 1, CORESET pool 2, and CORESET pool 3 indicate corresponding TCI state lists related to different CORESET pools, respectively.

It is understood that each element in the Table 1 above exists independently and is listed in the same table by example, but it does not mean that all elements in the table must exist at the same time as shown in the table. The value of each of these elements is independent of any of the other element values in Table 1. It is therefore understood by those skilled in the art that the value of each element in Table 1 is an independent embodiment.

In the indication method provided by an embodiment of the present disclosure, the indication information includes: an extended logical channel identity document (eLCID) and a first CORESET pool ID; in which the eLCID includes: a third value and a fourth value; the third value, the fourth value and the first CORESET pool ID are used to enable the UE to determine the TCI state list related to the CORESET pool so as to realize the valid indication of TCI state lists related to more CORESET pool.

The first CORESET pool ID may be one of at least one CORESET pool ID contained in the indication information. In the embodiments of the present disclosure, the third value and the fourth value contained in the eLCID, and the existing first CORESET pool ID may be combined to realize the valid indication of TCI state lists related to more CORESET pools.

The third value may be such as the above reserved value 225 of the eLCID, and the fourth value may be such as the above reserved value 226 of the eLCID. Of course, the third value may also be any one of integer values ranging from 0 to 226 of the eLCID, and the second value may also be the above eLCID value, which are combined with the 1 bit first CORESET pool ID to realize the indication of TCI state lists related to different CORESET pools.

For example, in a case that the eLCID value is 225 (that is, the eLCID includes the third value 225) and the CORSET pool ID is 0, the PDCCH is from CORESET pool 0. In a case that the eLCID value is 225 (that is, the eLCID includes the third value 225) and the CORSET pool ID is 1, the PDCCH is from CORESET pool 1. In a case that the eLCID value is 226 (that is, the eLCID includes the fourth value 226) and the CORSET pool ID is 0, the PDCCH comes from CORESET pool 2. In a case that the eLCID value is 226 (that is, the eLCID includes the fourth value 226) and the CORSET pool ID is 1, the PDCCH comes from CORESET pool 3. The CORESET pool 0, CORESET pool 1, CORESET pool 2, and CORESET pool 3 indicate corresponding TCI state list related to different CORESET pools, respectively.

In the indication method provided by an embodiment of the present disclosure, the indication information includes: an extended logical channel identity document (eLCID), a first CORESET pool ID, and a second CORESET pool ID; in which the eLCID includes: a third value; the third value, the first CORESET pool ID and the second CORESET pool ID are used to enable the UE to determine the TCI state list related to the CORESET pool, so as to realize the valid indication of TCI state lists related to more CORESET pools.

For example, the eLCID includes: the third value 225. In a case that the eLCID is 225, the existing first CORSET pool ID and the new second CORSET pool ID jointly indicate TCI lists related to different CORSET pools, as shown in Table 2 below.

**Table 2**

| eLCID | CORESET pool ID | CORESET pool |
|---|---|---|
| 225 | 00 | CORESET pool 0 |
| 225 | 01 | CORESET pool 1 |
| 225 | 10 | CORESET pool 2 |
| 225 | 11 | CORESET pool 3 |

In a case that the CORESET pool ID is 00, it indicates that the existing first CORESET pool ID is 0 and the new second CORESET pool ID is 0. In a case that the CORESET pool ID is 01, it indicates that the existing first CORESET pool ID is 0 and the new second CORESET pool ID is 1. In a case that the CORESET pool ID is 10, it indicates that the existing first CORESET pool ID is 1 and the new second CORESET pool ID is 0. In a case that the CORESET pool ID is 11, it indicates that the existing first CORESET pool ID is 1 and the new second CORESET pool ID is 1. In a case that the eLCID is 225 (that is, the eLCID includes the third value 225) and the CORSET pool ID is 00, the PDCCH is from CORESET pool 0. In a case that the eLCID is 225 (that is, the eLCID includes the third value 225) and the CORSET pool ID is 01, the PDCCH is from CORESET pool 1. In a case that the eLCID is 225 (that is, the eLCID includes the third value 225) and the CORSET pool ID is 10, the PDCCH is from CORESET pool 2. In a case that the eLCID is 225 (that is, the eLCID includes the third value 225) and the CORSET pool ID is 11, the PDCCH is from CORESET pool 3. The CORESET pool 0, CORESET pool 1, CORESET pool 2, and CORESET pool 3 indicate corresponding TCI state lists related to different CORESET pools, respectively.

It is understood that each element in the Table 2 above exists independently and is listed in the same table by example, but it does not mean that all elements in the table must exist at the same time as shown in the table. The value of each of these elements is independent of any of the other element values in Table 2. It is therefore understood by those skilled in the art that the value of each element in Table 2 is an independent embodiment.

The embodiment of the present disclosure supports combining a third value of the eLCID, the 1 bit first CORSET pool ID with 1 bit new second CORSET pool ID to indicate the TCI state lists related to different CORESET pools. The new second CORSET pool ID is the bit where T0 of the MAC CE signaling frame in the related technology is located, and all Ti are shifted backward in sequence.

In the indication method provided by an embodiment of the present disclosure, the indication information includes: a logical channel identity document (LCID), a first CORESET pool ID; and a third CORESET pool ID; in which the LCID includes: a first value; the first value, the first CORESET pool ID and the third CORESET pool ID are used to enable the UE to determine the TCI state list related to the CORESET pool so as to realize the valid indication of TCI state lists related to more CORESET pools.

The first CORESET pool ID may be one of at least one CORESET pool ID contained in the indication information. The third CORESET pool ID may be another one of at least one CORESET pool ID contained in the indication information. The third CORESET pool ID may be the bit of the reserved field R in the frame format of the MAC CE PDU shown in FIG. 4 above, that is, the bits of the third CORESET pool ID and the second CORESET pool ID may be different. The third CORESET pool ID occupies the bit of the reserved field R in frame format of the the MAC CE PDU and the bit where the second CORESET pool ID is located is a new bit.

For example, a reserved value (the first value) of the LCID, a reserved bit (the third CORESET pool ID) in the MAC CE PDU and the existing first CORESET pool ID may be combined to indicate the TCI state lists related to different CORESET pools.

As shown in FIG. 6, FIG. 6 is a schematic diagram of a format of MAC CE signaling frame in an embodiment of the present disclosure. It includes the existing first CORSET pool ID, the third CORSET pool ID, the serving cell identity document (Serving cell ID) and the bandwidth part identity document (BWP ID). A reserved value (the first value) of the LCID, the 1 bit first CORSET pool ID and the 1 bit third CORSET pool ID are combined to realize the valid indication of TCI state lists related to more CORESET pools.

For example, the reserved value (the first value may be 35) of the LCID, and the third CORSET pool ID in conjunction with the existing first CORSET pool ID indicate four states. As shown in Table 3 below, each state indicates a TCI states list related to one CORSET pool.

**Table 3**

| LCID | CORESET pool ID |
|---|---|
| 35 | 00 |
| 35 | 01 |
| 35 | 10 |
| 35 | 11 |

In a case that the CORESET pool ID is 00, it indicates that the existing first CORESET pool ID is 0 and the third CORESET pool ID is 0. In a case that the CORESET pool ID is 01, it indicates that the existing first CORESET pool ID is 0 and the third CORESET pool ID is 1. In a case that the CORESET pool ID is 10, it indicates that the existing first CORESET pool ID is 1 and the third CORESET pool ID is 0. In a case that the CORESET pool ID is 11, it indicates that the existing first CORESET pool ID is 1 and the third CORESET pool ID is 1. There are no restriction on this.

It is understood that each element in the Table 3 above exists independently and is listed in the same table by example, but it does not mean that all elements in the table must exist at the same time as shown in the table. The value of each of these elements is independent of any of the other element values in Table 3. It is therefore understood by those skilled in the art that the value of each element in Table 3 is an independent embodiment.

In the indication method provided by an embodiment of the present disclosure, the indication information includes: an extended logical channel identity document (eLCID), a first CORESET pool ID; and a third CORESET pool ID; in which the eLCID includes: a third value; the third value, the first CORESET pool ID and the third CORESET pool ID are used to enable the UE to determine the TCI state list related to the CORESET pool, so as to realize the valid indication of TCI state lists related to more CORESET pools.

For example, a reserved value (the third value may be 226) of the eLCID, a reserved bit (the third CORESET pool ID) in the MAC CE PDU and the existing first CORESET pool ID are combined to indicate the TCI state lists related to different CORESET pools.

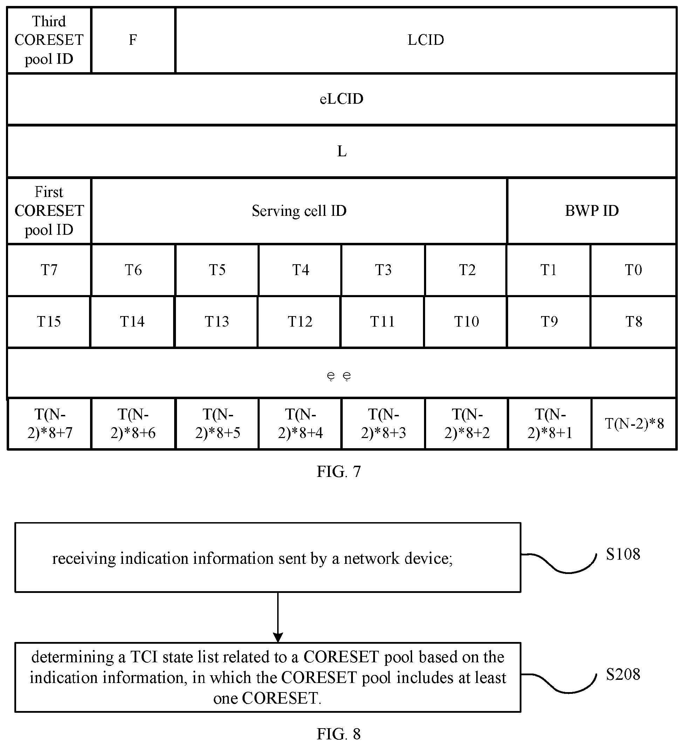

As shown in FIG. 7, FIG. 7 is a schematic diagram of a format of MAC CE signaling frame in an embodiment of the present disclosure. It includes the existing first CORSET pool ID, the third CORSET pool ID, the serving cell identity document (Serving cell ID), the bandwidth part identity document (BWP ID), the LCID, and the eLCID. A reserved value (the third value, for example 226) of the eLCID, the 1 bit CORSET pool ID and the 1 bit third CORSET pool ID are combined to realize the valid indication of TCI state lists related to more CORESET pools.

In the indication method provided by an embodiment of the present disclosure, the indication information is carried in a media access control control element (MAC CE) signaling; in which a TCI state indicated by downlink control information (DCI) received on a CORESET in the CORESET pool is derived from the TCI state list in the MAC CE signaling of the CORESET pool. In this way, it may support the valid indication of the TCI state lists related to different CORESET pools in the process of sending the indication information based on the MAC CE signaling.

For the explanations of steps of the following embodiments which are the same or corresponding to those described in the above embodiments, reference may be made specifically to the above embodiments, which will not be repeated here.

FIG. 8 is a flowchart illustrating an indication method provided in an embodiment of the present disclosure. The method is performed by a user equipment (UE). The indication method in the embodiment may be applied to the UE without limitation.

As illustrated in FIG. 8, the method may include but not limited to the following steps.

S108: indication information sent by a network device is received.

S208: a transmission configuration indicator (TCI) state list related to a control resource set (CORESET) pool is determined based on the indication information, in which the CORESET pool includes at least one CORESET.

In the embodiment, the indication information from the network device is received, the TCI state list related to the CORESET pool is determined based on the indication information, and the CORESET pool includes at least one CORESET, which may realize a valid indication of the TCI state list of the CORESET in the multi-TRP connection scenario.

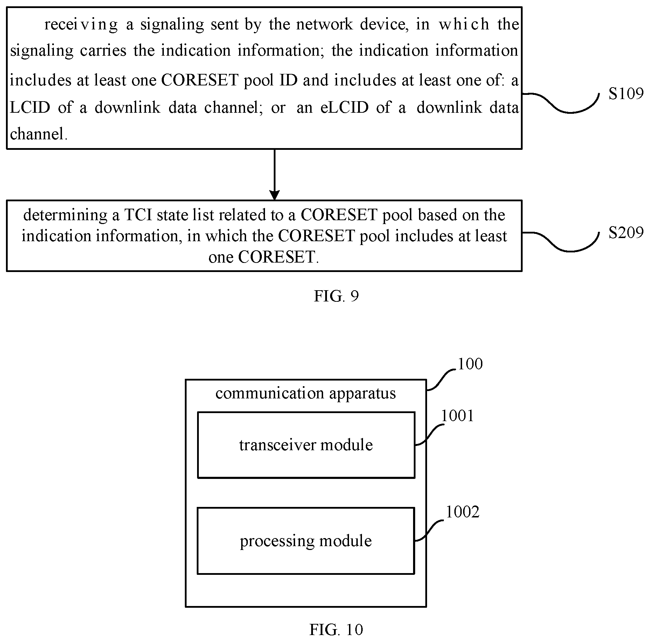

FIG. 9 is a flowchart illustrating an indication method provided in an embodiment of the present disclosure. The method is performed by a user equipment (UE). The indication method in the embodiment may be applied to the UE without limitation.

As illustrated in FIG. 9, the method may include but not limited to the following steps.

S109: a signaling sent by the network device is received, in which the signaling carries the indication information; in which the indication information includes at least one CORESET pool identifier (ID) and includes at least one of: a logical channel identity document (LCID) of a downlink data channel; or an extended logical channel identity document (eLCID) of a downlink data channel.

S209: the TCI state list related to the CORESET pool is determined based on the indication information, in which the CORESET pool includes at least one CORESET.

In the embodiment, the signaling sent by the network device is received, in which the signaling carries the indication information, the indication information includes at least one CORESET pool identifier (ID) and includes at least one of: a logical channel identity document (LCID) of a downlink data channel or an extended logical channel identity document (eLCID) of the downlink data channel; and the TCI state list related to the CORESET pool is determined based on the indication information, in which the CORESET pool includes at least one CORESET. In this way, the valid indication of the TCI state list of the CORESET in the multi-TRP connection scenario may be realized. And by carrying the indication information in the signaling, and sending the indication information to the UE based on the way of sending the signaling, the transmission efficiency and transmission security of the indication information may be effectively ensured, and additional indication costs may be effectively avoided.

In the indication method provided by an embodiment of the present disclosure, the indication information includes a logical channel identity document (LCID) and a first CORESET pool ID; in which the LCID includes: a first value and a second value; determining the TCI state list related to the CORESET pool based on the indication information includes: determining the TCI state list related to the CORESET pool based on the first value, the second value and the first CORESET pool ID.

In the indication method provided by an embodiment of the present disclosure, the indication information includes a logical channel identity document (LCID), a first CORESET pool ID; and a second CORESET pool ID; in which the LCID includes: a first value; determining the TCI state list related to the CORESET pool based on the indication information includes: determining the TCI state list related to the CORESET pool based on the first value, the first CORESET pool ID and the second CORESET pool ID.

In the indication method provided by an embodiment of the present disclosure, the indication information includes an extended logical channel identity document (eLCID) and a first CORESET pool ID; in which the eLCID includes: a third value and a fourth value; determining the TCI state list related to the CORESET pool based on the indication information includes: determining the TCI state list related to the CORESET pool based on the third value, the fourth value and the first CORESET pool ID.

In the indication method provided by an embodiment of the present disclosure, the indication information includes an extended logical channel identity document (eLCID), a first CORESET pool ID; and a second CORESET pool ID; in which the eLCID includes: a third value; determining the TCI state list related to the CORESET pool based on the indication information includes: determining the TCI state list related to the CORESET pool based on the third value, the first CORESET pool ID and the second CORESET pool ID.

In the indication method provided by an embodiment of the present disclosure, the indication information includes a logical channel identity document (LCID), a first CORESET pool ID; and a third CORESET pool ID; in which the LCID includes: a first value; determining the TCI state list related to the CORESET pool based on the indication information includes: determining the TCI state list related to the CORESET pool based on the first value, the first CORESET pool ID and the third CORESET pool ID.

In the indication method provided by an embodiment of the present disclosure, the indication information includes an extended logical channel identity document (eLCID), a first CORESET pool ID; and a third CORESET pool ID; in which the eLCID includes: a third value; determining the TCI state list related to the CORESET pool based on the indication information includes: determining the TCI state list related to the CORESET pool based on the third value, the first CORESET pool ID and the third CORESET pool ID.

In the indication method provided by an embodiment of the present disclosure, the indication information is carried in a media access control control element (MAC CE) signaling; in which a TCI state indicated by downlink control information (DCI) received on a CORESET in the CORESET pool is derived from the TCI state list in the MAC CE signaling of the CORESET pool.

FIG. 10 is a block diagram illustrating a communication apparatus provided in an embodiment of the present disclosure. The communication apparatus 100 as illustrated in FIG. 10 may include a transceiver module 1001 and a processing module 1002. The transceiver module 1001 may include a sending module and/or a receiving module, in which the sending module is used to achieve the sending function, and the receiving module is used to achieve the receiving function. The transceiver module 1001 may achieve the sending function and/or the receiving function.

The communication apparatus 100 may be a network device (for example the network device in the preceding method embodiments), an apparatus in the network device, or an apparatus capable of being used in combination with the network device. Or, the communication apparatus 100 may be a terminal (for example the UE in the preceding method embodiments), an apparatus in the terminal, or an apparatus capable of being used in combination with the terminal.

The communication apparatus 100, applied to the network device, including:
a transceiver module 1001, configured to send indication information to a user equipment (UE), in which the indication information is used to enable the UE to determine a transmission configuration indicator (TCI) state list related to a control resource set (CORESET) pool, and the CORESET pool includes at least one CORESET.

In the indication method provided by an embodiment of the present disclosure, sending the indication information to the UE includes:
sending a signaling to the UE, in which the signaling carries the indication information;
in which the indication information includes at least one CORESET pool identifier (ID) and includes at least one of:
a logical channel identity document (LCID) of a downlink data channel; or
an extended logical channel identity document (eLCID) of a downlink data channel.

In the indication method provided by an embodiment of the present disclosure, the indication information includes:
a logical channel identity document (LCID); in which the LCID includes: a first value and a second value; and
a first CORESET pool ID;
in which the first value, the second value and the first CORESET pool ID are used to enable the UE to determine the TCI state list related to the CORESET pool.

In the indication method provided by an embodiment of the present disclosure, the indication information includes:
a logical channel identity document (LCID); in which the LCID includes: a first value;
a first CORESET pool ID; and
a second CORESET pool ID;
in which the first value, the first CORESET pool ID and the second CORESET pool ID are used to enable the UE to determine the TCI state list related to the CORESET pool.

In the indication method provided by an embodiment of the present disclosure, the indication information includes:
an extended logical channel identity document (eLCID); in which the eLCID includes: a third value and a fourth value; and
a first CORESET pool ID;
in which the third value, the fourth value and the first CORESET pool ID are used to enable the UE to determine the TCI state list related to the CORESET pool.
In the indication method provided by an embodiment of the present disclosure, the indication information includes:
an extended logical channel identity document (eLCID); in which the eLCID includes: a third value;
a first CORESET pool ID; and
a second CORESET pool ID;
in which the third value, the first CORESET pool ID and the second CORESET pool ID are used to enable the UE to determine the TCI state list related to the CORESET pool.

In the indication method provided by an embodiment of the present disclosure, the indication information includes:
a logical channel identity document (LCID); in which the LCID includes: a first value;
a first CORESET pool ID; and
a third CORESET pool ID;
in which the first value, the first CORESET pool ID and the third CORESET pool ID are used to enable the UE to determine the TCI state list related to the CORESET pool.

In the indication method provided by an embodiment of the present disclosure, the indication information includes:
an extended logical channel identity document (eLCID); in which the eLCID includes: a third value;
a first CORESET pool ID; and
a third CORESET pool ID;
in which the third value, the first CORESET pool ID and the third CORESET pool ID are used to enable the UE to determine the TCI state list related to the CORESET pool.

In the indication method provided by an embodiment of the present disclosure, the indication information is carried in a media access control control element (MAC CE) signaling;
in which a TCI state indicated by downlink control information (DCI) sent on a CORESET in the CORESET pool is derived from the TCI state list in the MAC CE signaling of the CORESET pool.

By implementing the method of this disclosure, the indication information is sent to the UE, to indicate the TCI state list related to the CORESET pool for the UE based on the indication information. The CORESET pool includes at least one CORESET, which may realize a valid indication of the TCI state list of the CORESET in the multi-TRP connection scenario.

The communication apparatus 100, applied to the UE, including:
a transceiver module 1001, configured to receive indication information sent by a network device; and
a processing module 1002, configured to determine a transmission configuration indicator (TCI) state list related to a control resource set (CORESET) pool based on the indication information, in which the CORESET pool includes at least one CORESET.

In the indication method provided by an embodiment of the present disclosure, receiving the indication information sent by the network device includes:
receiving a signaling sent by the network device, in which the signaling carries the indication information;
in which the indication information includes at least one CORESET pool identifier (ID) and includes at least one of:
a logical channel identity document (LCID) of a downlink data channel; or
an extended logical channel identity document (eLCID) of a downlink data channel.

In the indication method provided by an embodiment of the present disclosure, the indication information includes:
a logical channel identity document (LCID); in which the LCID includes: a first value and a second value;
and a first CORESET pool ID;
in which determining the TCI state list related to the CORESET pool based on the indication information includes:
determining the TCI state list related to the CORESET pool based on the first value, the second value and the first CORESET pool ID.

In the indication method provided by an embodiment of the present disclosure, the indication information includes:
a logical channel identity document (LCID); in which the LCID includes: a first value;
a first CORESET pool ID; and
a second CORESET pool ID;
in which determining the TCI state list related to the CORESET pool based on the indication information includes:
determining the TCI state list related to the CORESET pool based on the first value, the first CORESET pool ID and the second CORESET pool ID.

In the indication method provided by an embodiment of the present disclosure, the indication information includes:
an extended logical channel identity document (eLCID); in which the eLCID includes: a third value and a fourth value; and
a first CORESET pool ID;
in which determining the TCI state list related to the CORESET pool based on the indication information includes:
determining the TCI state list related to the CORESET pool based on the third value, the fourth value and the first CORESET pool ID.

In the indication method provided by an embodiment of the present disclosure, the indication information includes:
an extended logical channel identity document (eLCID); in which the eLCID includes: a third value;
a first CORESET pool ID; and
a second CORESET pool ID;
in which determining the TCI state list related to the CORESET pool based on the indication information includes:
determining the TCI state list related to the CORESET pool based on the third value, the first CORESET pool ID and the second CORESET pool ID.

In the indication method provided by an embodiment of the present disclosure, the indication information includes:
a logical channel identity document (LCID); in which the LCID includes: a first value;
a first CORESET pool ID; and
a third CORESET pool ID;
in which determining the TCI state list related to the CORESET pool based on the indication information includes:
determining the TCI state list related to the CORESET pool based on the first value, the first CORESET pool ID and the third CORESET pool ID.

In the indication method provided by an embodiment of the present disclosure, the indication information includes:
an extended logical channel identity document (eLCID); in which the eLCID includes: a third value;
a first CORESET pool ID; and
a third CORESET pool ID;
in which determining the TCI state list related to the CORESET pool based on the indication information includes:
determining the TCI state list related to the CORESET pool based on the third value, the first CORESET pool ID and the third CORESET pool ID.

In the indication method provided by an embodiment of the present disclosure, the indication information is carried in a media access control control element (MAC CE) signaling;
in which a TCI state indicated by downlink control information (DCI) received on a CORESET in the CORESET pool is derived from the TCI state list in the MAC CE signaling of the CORESET pool.

By implementing the method of this disclosure, the indication information from the network device is received, the TCI state list related to the CORESET pool is determined based on the indication information, and the CORESET pool includes at least one CORESET, which may realize a valid indication of the TCI state list of the CORESET in the multi-TRP connection scenario effectively.

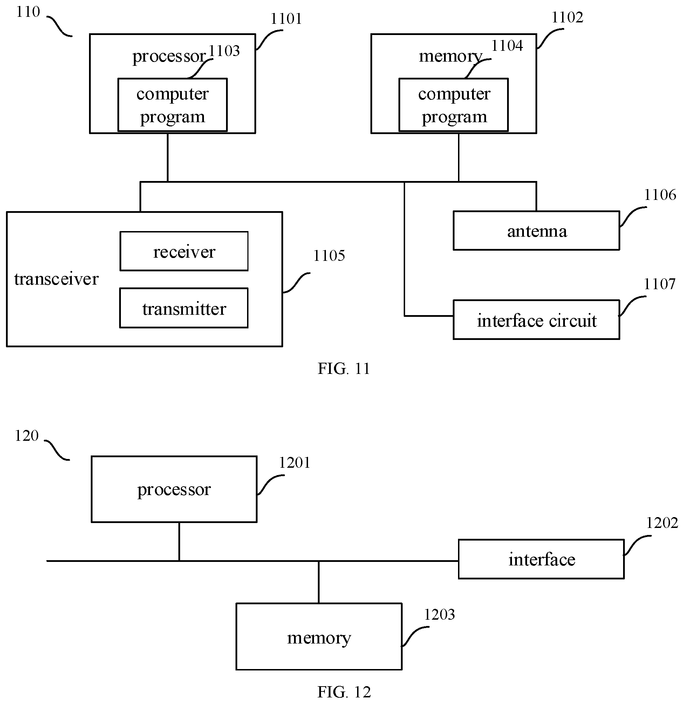

FIG. 11 is a block diagram illustrating a communication apparatus provided in an embodiment of the present disclosure. The communication apparatus 110 may be a terminal (for example the terminal in the preceding method embodiments ), a network device (for example the network device in the preceding method embodiments), a chip, a system on chip or a processor that supports the terminal to implement the method, or a chip, a system on chip or a processor that supports the network device to implement the method. The apparatus may be configured to implement the method described in the method embodiments. For details, please refer to the above method embodiments.

The communication apparatus 110 may include one or more processors 1101. The processor 1101 may include a general purpose processor or a dedicated processor. For example, it may be a baseband processor or a central processor. The baseband processor may be configured to process a communication protocol and communication data, and the central processor may be configured to control a communication apparatus (e.g., a base station, a baseband chip, a terminal, a terminal chip, a DU or CU, etc.), to execute a computer program, and process data of the computer program.

Optionally, the communication apparatus 110 may further include one or more memories 1102 with a computer program 1104 stored thereon. The processors 1101 may store a computer program 1103. The processor 1101 executes the computer program 1104 and/or the computer program 1103 so that the communication apparatus 110 performs the method as described in the above method embodiments.

Optionally, the memory 1102 may further store data. The communication apparatus 110 and the memory 1102 may be independently configured or integrated together.

Optionally, the communication apparatus 110 may further include a transceiver 1105 and an antenna 1106. The transceiver 1105 may be referred to as a transceiving unit, a transceiver or a transceiving circuit, which may be configured to achieve a transceving function. The transceiver 1105 may include a receiver and a transmitter. The receiver may be referred to as a receiver or a receiving circuit, etc., for implementing a receiving function; the transmitter may be referred to as a transmitter or a transmission circuit, etc. for implementing a transmission function.

Optionally, the communication apparatus 110 may further include one or more interface circuits 1107. The interface circuit 1107 is configured to receive code instructions and transmit the code instructions to the processor 1101. The processor 1101 runs the code instructions so that the communication apparatus 110 performs the method as described in the above method embodiment.

In an implementation, the processor 1101 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 1101 may be stored with a computer program 1103. The computer program 1103 runs on the processor 1101 so that the communication apparatus 110 performs the method as described in the above method embodiments. The computer program 1103 may be solidified in the processor 1101, in which case the processor 1101 may be implemented by a hardware.

In an implementation, the communication apparatus 110 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may also be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs), etc.

The communication apparatus described in the above embodiments may be a terminal (for example the terminal in the preceding method embodiments) or a network device (for example the network device in the preceding method embodiments), but the scope of the communication apparatus described in the present disclosure is not limited thereto, and a structure of the communication apparatus may not be subject to FIG. 11. The communication apparatus may be a stand-alone device or may be a part of a larger device. For example, the communication apparatus may be:
(1) a stand-alone integrated circuit (IC), or a chip, or a system on chip or a subsystem;
(2) a set of one or more ICs, which, optionally, may also include a storage component configured to store data and a computer program;
(3) an ASIC, such as a Modem;
(4) a module that may be embedded within other devices;
(5) a receiver, a terminal, a smart terminal, a cellular phone, a wireless device, a handset, a mobile unit, an in-vehicle device, a network device, a cloud device, an artificial intelligence device, etc.; and
(6) others, and so forth.

For the case that the communication apparatus may be a chip or a system on chip, please refer to a diagram of a structure of a chip as illustrated in FIG. 12. The chip illustrated in FIG. 12 may include a processor 1201 and an interface 1202. There may be one or more processors 1201, and there may be a plurality of interfaces 1202.

In a case that the chip is used to implement the functions of the network device in the embodiments of the present disclosure:
the processor 1201 is used to implement the method steps, etc. in the embodiments shown in FIG. 2-7 above.

In a case that the chip is used to implement the functions of the UE in the embodiments of the present disclosure:
the processor 1201 is used to implement the method steps, etc. in the embodiments shown in FIG. 8-9 above.

Optionally, the chip further includes a memory 1203. The memory 1203 is configured to save a necessary computer program and data.

Those skilled in the related art may understand that, various illustrative logical blocks and steps listed in embodiments of the present disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the present disclosure.

A communication system is further provided in embodiments of the disclosure. The system includes a communication apparatus serving as a terminal (for example the terminal in the preceding method embodiments) and a communication apparatus serving as a network device (for example the network device in the preceding method embodiments) in the embodiments of FIG. 10, or the system includes a communication apparatus serving as a terminal (for example the terminal in the preceding method embodiments) and a communication apparatus serving as a network device (for example the network device in the preceding method embodiments) in the embodiments of FIG. 11.

A readable storage medium with instructions stored thereon is further provided in the disclosure. When the instructions are executed by a computer, steps in the any one method embodiment are implemented.

A computer program product is further provided. The computer program product implements functions of the above any one method embodiment when executed by a processor.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another in a wire (e.g., a coaxial cable, an optical fiber, a digital subscriber line (DSL)) or wireless (e.g., infrared, wireless, microwave) manner. The computer-readable storage medium may be any available medium that may be accessed by a computer or a data storage device, such as a server and a data center, that integrates one or more available media. The available media may be magnetic media (e.g., floppy disks, hard disks, magnetic tapes), optical media (e.g., high-density digital video discs (DVDs)), or semiconductor media (e.g., solid state disks, SSD)) etc.

Those skilled in the art may understand that various numbers such as first and second involved in the disclosure are distinguished merely for convenience of description, and are not intended to limit the scope of embodiments of the disclosure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the present disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the present disclosure, corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, the units and algorithm steps of each example described in conjunction with the embodiments disclosed herein can be implemented in an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the present disclosure.

Those skilled in the art may clearly understand that, specific working processes of systems, apparatuses and units described above may refer to corresponding processes in the above method embodiments, which will not be repeated here.

The above are only implementations of the disclosure, but the protection scope of the disclosure is not limited thereto. Any changes or substitutions that may be easily considered by those skilled in the art within the scope of the present disclosure should be covered by the scope of protection of the disclosure. Therefore, the protection scope of the present disclosure should be subject to the protection scope of claims.

## Claims

1. An indication method, performed by a network device, comprising:
sending indication information to a user equipment (UE), wherein the indication information is used to enable the UE to determine a transmission configuration indicator (TCI) state list related to a control resource set (CORESET) pool, and the CORESET pool comprises at least one CORESET.

2. The method according to claim 1, wherein sending the indication information to the UE comprises:
sending a signaling to the UE, wherein the signaling carries the indication information;
wherein the indication information comprises at least one CORESET pool identifier (ID) and comprises at least one of:
a logical channel identity document (LCID) of a downlink data channel; or
an extended logical channel identity document (eLCID) of a downlink data channel.

3. The method according to any one of claims 1 to 2, wherein the indication information comprises:
a logical channel identity document (LCID); wherein the LCID comprises: a first value and a second value; and
a first CORESET pool ID;
wherein the first value, the second value and the first CORESET pool ID are used to enable the UE to determine the TCI state list related to the CORESET pool.

4. The method according to any one of claims 1 to 2, wherein the indication information comprises:
a logical channel identity document (LCID); wherein the LCID comprises: a first value;
a first CORESET pool ID; and
a second CORESET pool ID;
wherein the first value, the first CORESET pool ID and the second CORESET pool ID are used to enable the UE to determine the TCI state list related to the CORESET pool.

5. The method according to any one of claims 1 to 2, wherein the indication information comprises:
an extended logical channel identity document (eLCID); wherein the eLCID comprises: a third value and a fourth value; and
a first CORESET pool ID;
wherein the third value, the fourth value and the first CORESET pool ID are used to enable the UE to determine the TCI state list related to the CORESET pool.

6. The method according to any one of claims 1 to 2, wherein the indication information comprises:
an extended logical channel identity document (eLCID); wherein the eLCID comprises: a third value;
a first CORESET pool ID; and
a second CORESET pool ID;
wherein the third value, the first CORESET pool ID and the second CORESET pool ID are used to enable the UE to determine the TCI state list related to the CORESET pool.

7. The method according to any one of claims 1 to 2, wherein the indication information comprises:
a logical channel identity document (LCID); wherein the LCID comprises: a first value;
a first CORESET pool ID; and
a third CORESET pool ID;
wherein the first value, the first CORESET pool ID and the third CORESET pool ID are used to enable the UE to determine the TCI state list related to the CORESET pool.

8. The method according to any one of claims 1 to 2, wherein the indication information comprises:
an extended logical channel identity document (eLCID); wherein the eLCID comprises: a third value;
a first CORESET pool ID; and
a third CORESET pool ID;
wherein the third value, the first CORESET pool ID and the third CORESET pool ID are used to enable the UE to determine the TCI state list related to the CORESET pool.

9. The method according to any one of claims 1 to 8, wherein the indication information is carried in a media access control control element (MAC CE) signaling;
wherein a TCI state indicated by downlink control information (DCI) sent on a CORESET in the CORESET pool is derived from the TCI state list in the MAC CE signaling of the CORESET pool.

10. An indication method, performed by a user equipment (UE), comprising:
receiving indication information sent by a network device;
determining a transmission configuration indicator (TCI) state list related to a control resource set (CORESET) pool based on the indication information, wherein the CORESET pool comprises at least one CORESET.

11. The method according to claim 10, wherein receiving the indication information sent by the network device comprises:
receiving a signaling sent by the network device, wherein the signaling carries the indication information;
wherein the indication information comprises at least one CORESET pool identifier (ID) and comprises at least one of:
a logical channel identity document (LCID) of a downlink data channel; or
an extended logical channel identity document (eLCID) of a downlink data channel.

12. The method according to any one of claims 10 to 11, wherein the indication information comprises:
a logical channel identity document (LCID); wherein the LCID comprises: a first value and a second value; and
a first CORESET pool ID;
wherein determining the TCI state list related to the CORESET pool based on the indication information comprises:
determining the TCI state list related to the CORESET pool based on the first value, the second value and the first CORESET pool ID.

13. The method according to any one of claims 10 to 11, wherein the indication information comprises:
a logical channel identity document (LCID); wherein the LCID comprises: a first value;
a first CORESET pool ID; and
a second CORESET pool ID;
wherein determining the TCI state list related to the CORESET pool based on the indication information comprises:
determining the TCI state list related to the CORESET pool based on the first value, the first CORESET pool ID and the second CORESET pool ID.

14. The method according to any one of claims 10 to 11, wherein the indication information comprises:
an extended logical channel identity document (eLCID); wherein the eLCID comprises: a third value and a fourth value; and
a first CORESET pool ID;
wherein determining the TCI state list related to the CORESET pool based on the indication information comprises:
determining the TCI state list related to the CORESET pool based on the third value, the fourth value and the first CORESET pool ID.

15. The method according to any one of claims 10 to 11, wherein the indication information comprises:
an extended logical channel identity document (eLCID); wherein the eLCID comprises: a third value;
a first CORESET pool ID; and
a second CORESET pool ID;
wherein determining the TCI state list related to the CORESET pool based on the indication information comprises:
determining the TCI state list related to the CORESET pool based on the third value, the first CORESET pool ID and the second CORESET pool ID.

16. The method according to any one of claims 10 to 11, wherein the indication information comprises:
a logical channel identity document (LCID); wherein the LCID comprises: a first value;
a first CORESET pool ID; and
a third CORESET pool ID;
wherein determining the TCI state list related to the CORESET pool based on the indication information comprises:
determining the TCI state list related to the CORESET pool based on the first value, the first CORESET pool ID and the third CORESET pool ID.

17. The method according to any one of claims 10 to 11, wherein the indication information comprises:
an extended logical channel identity document (eLCID); wherein the eLCID comprises: a third value;
a first CORESET pool ID; and
a third CORESET pool ID;
wherein determining the TCI state list related to the CORESET pool based on the indication information comprises:
determining the TCI state list related to the CORESET pool based on the third value, the first CORESET pool ID and the third CORESET pool ID.

18. The method according to any one of claims 10 to 17, wherein the indication information is carried in a media access control control element (MAC CE) signaling;
wherein a TCI state indicated by downlink control information (DCI) received on a CORESET in the CORESET pool is derived from the TCI state list in the MAC CE signaling of the CORESET pool.

19. A communication apparatus, comprising:
a transceiver module, configured to send indication information to a user equipment (UE), wherein the indication information is used to enable the UE to determine a transmission configuration indicator (TCI) state list related to a control resource set (CORESET) pool, and the CORESET pool comprises at least one CORESET.

20. A communication apparatus, comprising:
a transceiver module, configured to receive indication information sent by a network device;
a processing module, configured to determine a transmission configuration indicator (TCI) state list related to a control resource set (CORESET) pool based on the indication information, wherein the CORESET pool comprises at least one CORESET.

21. A communication system, comprising a network device and a user equipment (UE), wherein the network device performs a method according to any one of claims 1 to 9, and the UE performs a method according to any one of claims 10 to 18.

22. A computer-readable storage medium, used to store instruction, and when the instruction is executed, a method according to any one of claims 1 to 18 is implemented.
